# EUROPEAN PATENT SPECIFICATION

(11) **EP 0 396 940 B1**
(45) Date of publication and mention of the grant of the patent: **06.11.1996**
(21) Application number: 90107307.2
(22) Date of filing: 18.04.1990
(51) Int. Cl.: G06F 12/08

(54) **Cache memory and related consistency protocol**
Cache-Speicher und verwandtes Übereinstimmungsprotokoll
Antémémoire et protocole de cohérence apparenté

(30) Priority: 08.05.1989 IT 2041589
(43) Date of publication of application: 14.11.1990
(73) Proprietor: BULL HN INFORMATION SYSTEMS ITALIA S.p.A., 10014 Caluso (Torino) (IT)
(72) Inventor: Ferruccio, Zulian, I-20010 Cornaredo (MI) (IT)
(74) Representative: Falcetti, Carlo

(56) References cited:
- COMPCON SPRING 88, San Francisco, 29th February - 4th March 1988, conf, 33, pages 218-222, IEEE, New York, US; L.K. QUINONES: "The NS32605 cache controller"
- THE 13TH ANNUAL INTERNATIONAL SYMPOSIUM ON COMPUTER ARCHITECTURE, Tokyo, 2nd - 5th June 1986, pages 414-423, IEEE, New York, US; P. SWEAZEY et al.: "A class of compatible cache cosistency protocols and their support by the IEEEfuturebus"
- HIGH PERFORMANCE SYSTEMS, vol. 10, no. 4, April 1989, pages 58-64; R. BERESFORD: "Partitioning memory control for risc machines"

## Description

The present invention relates to cache memories and their consistency protocol in a multiprocessor data processing system.

In a multiprocessor system where a plurality of processors have access to a common resource (typically a shared working memory) through a system bus, the problem of bus saturation, as a limiting factor of the system performance, is resolved by means of caches coupled to each processor and acting as "buffers" among the processors and the bus.

The caches store information of most recent use by the processors and provide information items to the processors, without need of access to the system bus.

A problem in the use of caches in multiprocessor environment is data consistency.

If a processor modifies, with a write operation, a data stored in the related cache, without changing it in the working memory, a data inconsistency occurs. Another case of data inconsistency occurs when the same data is stored in more than one cache and the data is modified in one cache only.

Data consistency is mandatory for correct system operation.

Several arrangements have been proposed to assure data consistency. A broad review of such arrangements is contained in the article of J. ARCHIBALD, JL. BAER "Cache coherence Protocols: Evaluation Using a Multiprocessor Simulation Model " published in "ACM Transactions on Computer Systems" Vol. 4, N. 4 Nov 1986 pag. 273-296. The consistency protocols known as WRITE ONCE (or WRITE FIRST) and BERKELEY have to be mentioned among the most effective ones. According to the WRITE ONCE protocol, a data block in a cache may be, from a logical standpoint, in one of the following states, the states being identified by state bits associated to each block.
- Valid (V): the information block may be used and may be stored in more than one cache.
- Invalid (V): the information block is invalid and cannot be used.
- Reserved (R): the information block is stored in both one cache only and the working memory.
- Modified or Dirty(D): the information block has been modified (written) more than one time and is available in one cache only.
The WRITE ONCE protocol performs a write operation into the working memory the first time a data present in the cache is modified.

By this operation the data stored in the working memory is made consistent with the one stored in the cache. The block containing the data is placed in state reserved(R). Simultaneously all other caches watch the operation occurring on the system bus and if it is detected that they store the same data, the related block is set invalid.

If a modified data has to be written in a cache which does not contain it, a read operation from working memory or from the cache which contains it, must preceed the write operation.

If the same cache where the data has been modified, by setting the related block in state R, performs subsequent data modifications (write) in the same block, these writes are performed locally, without updating the contents of the working memory through the system bus. The block state in the cache is changed from reserved (R) to dirty (D).

The write operation performed when a block is set in reserved (R) state and provides data consistency of the working memory with the block in the cache does not constitute a useless bus and working memory occupation only if the block is modified (written) one time only.

In fact, if this is the case, the write operation is a substitute for the "write back" or memory write, which would be required when, in order to provide space for new information, the modified cache block has to be removed from the cache ("replacement" operation).

In case of subsequent, multiple write operations on the same block, which changes form state R to D, this write operation, even if required to invalidate the blocks in the other caches, is useless for consistency purpose and does not avoid the need to perform, soon or later, a replacement operation.

With the aim at reduction in the occupation of the bus and the working memory and avoidance of superfluous write operations, the BERKELEY protocol departs from the WRITE ONCE protocol by suppressing the state R and the related consistency operation and by adopting the concept of block "ownership".

In each cache, a block may be in one of the following states:
- Valid(V): the block may be used and may be present in more than one cache
- Invalid (V) the block is invalid and cannot be used.
- Owned (D): the block has been modified, is present in one cache only and owned by that cache.
- Shared-Owned(SD): the block has been modified, is owned by the cache but may be present in other caches
For each data block there is a single owner, which may be the working memory or a single cache.

Before modifying a data in one cache, that cache must become the owner of the data.

Therefore if a data to be modified is not present in a cache, the block containing it must first be read out from the owning entity, with a transfer in ownership, then it can be modified.

If the data was already in the cache and in valid state V, the ownership taking and the modification can be performed jointly without need to load the cache.

In both cases, it is required that all other copies of the block be set invalid.

Statistically the BERKELEY protocol appears of some advantage, because the memory read operations required to take ownership of a block are in lesser number than the memory write operations followed by a further write of the same block in the cache, occurring in the case of the WRITE ONCE protocol.
The resulting advantage is however modest. In addition, complications at bus level and related protocol are required to make feasible inter-cache invalidation operations, that is cache intercommunication when no working memory access is in course.
Recently, based on known protocols, a generalized state model for caches, known as MOESI model, has been defined which takes into account five possible states (see SWEAZEY et al. "A class of compatible cache consistency protocols and their support by the IEEE futu rebus" in THE 13TH ANNUAL SYMPOSIUM AND COMPUTER ARCHITECTURE - JUNE 1986 pages 414-423 IEEE N.Y.).

The generalized model is proposed as supporting a class of protocols which, in order to be implemented, require the use of a plurality of signal lines, in the system bus, additional to the read/write signal line.

Based on the MOESI model a cache memory has been designed, as reported in HIGH PERFORMANCE SYSTEMS, Vol. 10, N. 4, April 1989,
pages 58-64 by BERESFORD: "Partitioning memory control for risc machines".

In order to assure data consistency by means of a process named "direct data intervention", the protocol used in such cache requires three control signals on the system bus.

As reported in COMCON SPRING 88 San Francisco, Febr. 29, March 4, 1988 Conf. 33 pages 218-222 IEEE. N.Y.: QUINONES "the NS32605 cache controller" uses the same approach and requires the communication of status information over the shared bus. The document is of interest because it proposes the use of output write buffers, both for performing off line write operation on the system bus, both off line flushing to get cache space for read information to be stored in the cache. The flushing can therefore be performed off line subsequently to the read operation.

The advantages over the BERKELEY and WRITE ONCE protocols, provided in the three documents mentioned above, are obtained with the trade off of system bus complication, requiring additional leads to transfer status signals.

The present invention overcomes these disadvantages and provides a new cache protocol and related circuits which assure data consistency and at the same time reduce system bus occupation.

According to the invention these advantages are obtained with a protocol which may appear as a combination of the two above mentioned protocols, but which, rather than adding the limitations or one protocol to the ones of the other protocol, mutually eliminates such limitations.

In additions th block "ownership" concept as a prerequisite for block modification is reversed by giving any processor, which is not block owner and wants to modify it, the task not to take ownership and to modify it, but to impose the modification in the owning memory or cache.

In this way, all the operations which assure cache consistency are limited to write operations.

The only memory read operations which are needed, are those occurring when the information is not present in any of the caches.

The consistency protocol does not need any bus lead additional to those normally provided for controlling memory access operations and requires only that memory access operations are inhibited.

Therefore it may be used with most of the standard communication busses, synchronous or asynchronous, such as the VME BUS and the PSB bus (MULTIBUS).
As a further advantage, the memory write operations, including saving operations required in case of cache data replacement, may be performed off-line, thus avoiding processor idle times resulting from conflicts in the access to the system bus and from the writing time, resolving the consistency problems which may be originated by such conflicts and eliminating any stalling problem in the access to the bus.

The features and the advantages of the invention will appear more clearly from the following description of a preferred form of embodiment and from the enclosed drawings where:
- Figure 1 is a block diagram of a multiprocessor system.
- Figure 2 is a block diagram of a cache in accordance with the invention, for the system of Fig. 1.
- Figure 3 is a state diagram showing the operation of the cache of Fig. 2.
Referring to Fig.1 the mutliprocessor system comprises a working memory or RAM 1 shared by a plurality of processors or CPUs 2,3,N.

Each processor has a cache, respectively 4,5,6, associated thereto and communicates with the associated cache, through a CPU bus, 7,8,9 respectively. Each of the caches "traps" the data read/write requests issued by the associated CPU and, if in condition to do so, locally fulfils the request.

Otherwise it obtains control over a sytem bus 10 and through such bus transfers the read/write requests to the RAM1.

Other caches may substitute to the RAM1 for providing, in case of read operation, the requested information.

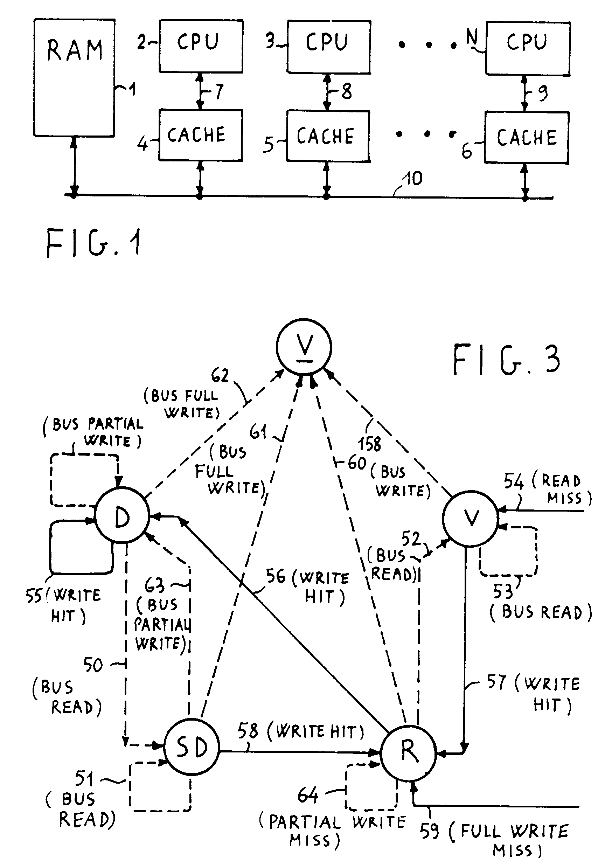

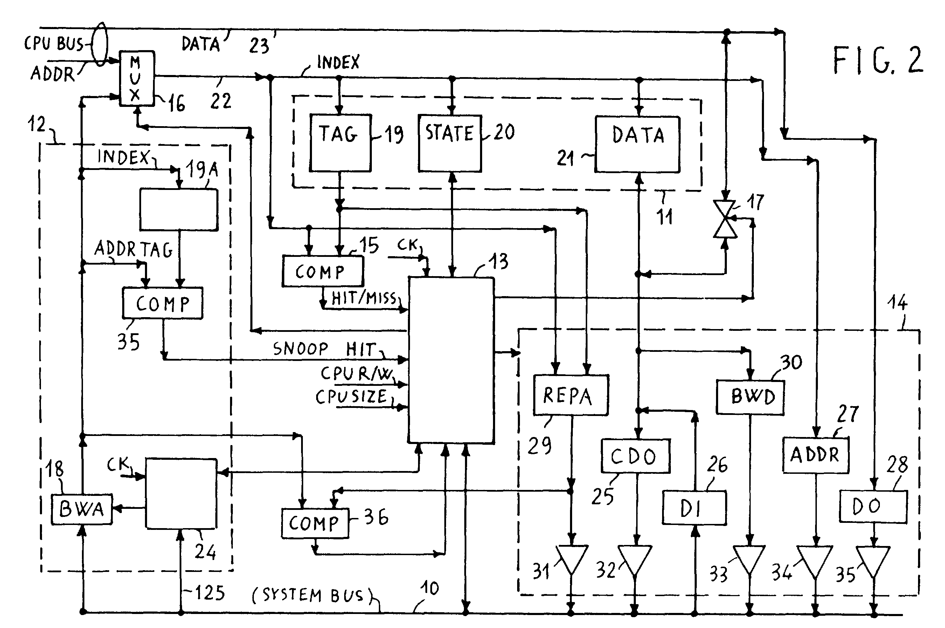

Figure 2 shows, in block diagram of greater detail, one of the caches of Fig. 1.

The cache of Fig. 2 comprises four main blocks: a fast memory block 11, a bus watching logic block 12, a control logic block 13 and an interface buffer 14, interfacing with the system bus 10.

It further comprises a comparator 15, a mutliplexer 16 and bidirectional control gates 17.

Memory 11 comprises a block 19 which stores the most significant portion or TAG of a plurality of addresses, a block 20 (STATE) which stores status bits related to the data blocks stored in the cache and a block 21 (DATA) which stores a plurality of data blocks.

Each data block may consist in a first predetermined number of bytes and the memory block 21 may have a parallelism equal to a second predetermined number of bytes.

If the two numbers coincide, one addressable location or memory 21 "entry" corresponds to each data block.

If the first number is a multiple of the second one, more memory 21 "entries" correspond to each data block.

In Fig. 2 assumption is made that one "entry" corresponds to each data block.

A 4 bytes block is stored at each entry. The four bytes may be severally modified (partial write) or integrally modified (full write) and are always read in 4 bytes block.

Assumption is further made that the CPU bus and the system bus have a parallelism of 4 bytes. Blocks 19,20,21 receive, as addressing information through multiplexer 16 and a channel 22, the least significant portion of the addresses present on the address bus of the CPU bus or the system bus 10.

This least significant address portion is referenced as INDEX. Blocks 19,20,21, so addressed, output the information stored at the addressed entry.

Comparator 15 receives at a first input the most significant address portion stored in cache 11 and, receives at a second input the most significant address portion (ADDR TAG) of the address present on address channel 22.
If the two tags coincide, the data block referenced by the address is contained in the cache and the comparator 15 outputs a HIT signal (a MISS signal in case of mismatch).
The signal HIT/MISS in output from comparator 15, together with a read/write signal from CPU (CPU R/W) and a signal defining the size of the data (CPU SIZE) are input to the control unit 13.
Unit 13, timed by a periodical signal CK, monitors the status bits in output from memory block 20 and related to the addressed data block and performs the required operations in accordance with the protocol which will be considered in the following.

For example, if access to the cache is for a read operation (CPU R/W asserted), HIT is asserted and the status bits indicate the block is valid, the requested block, read out from memory block 21 of the cache, is directly forwarded to the CPU, through data channel 23 of the CPU bus and through gates 17, without need of access to the system bus for reading the data out from the working memory.

The "bus watching" block 12 comprises a memory 19A (CACHE TAG) which constitutes an exact copy of block 19, two comparators 35,36 a latching register 18 and a control logic 24 which interacts with control logic 13.

Control logic 24 is timed by synchronization signal CK.

Logic 24 receives a signal from system bus 10, on lead 125.

This signal enables to detect when an operation is in course on the system bus.

Upon detection of such operation the logic 24 loads the address present on bus 10 in registers 18 (register BWA for Bus Watching Address).

The address loaded in register 18 in input to multiplexer 16.

The least significant portion (INDEX) of the address is further used to address memory 19A, whilst the most significant portion (ADDRTAG) is input to comparator 35 which receives at a second input the most significant address portion CACHE TAG read out from memory 19A.

If the two TAGs coincide, comparator 35 sends a signal SNOOP HIT to block 13.

Owing to such signal the control logic 13, once completed a possible cache access operation by the CPU, inhibits any further CPU operation on the cache until execution is performed of the cache updating which may be required as a consequence of the bus watching.

Block 14, interfacing with bus 10, comprises register CDO 25 for data in output from cache towards bus 10, a register DI 26 for data in input to the cache from bus 10, a register ADDR 27 for addresses in output from cache toward bus 10, a register REPA 29 for replacement addresses, and a register BWD for data in output from cache towards bus as a consequence of a bus watching operation.

The loading of registers from 25 to 30, as well as the enabling of their outputs through suitable drivers 31,32,33,34,35 is controlled by logic 13 which further controls multiplexer 17 and gates 17.

Control logic 13 has further the function, when requested by the cache, to obtain access to bus 10 for controlling read/write operations of the working memory 1.
Figure 3 shows, in state diagram, the operation of the cache of Fig.2 and defines the behaviour of control unit 13.

Each data block stored in the cache is characterized by status bits which define five possible states, shown as nodes V,V,D,SD,R.

Each block moves from one state to another state according to transitions shown as transition lines.

State changes are induced by operations performed by the processor associated to the cache or by operations watched on the system bus.

Transitions induced by the associated processor are shown as solid oriented lines.

Transitions induced by system bus watching are shown as dotted oriented lines.

Each data block in the cache, may be in one of the following states:
- VALID (V): Like in the WRITE ONCE and BERKELEY protocols a block is valid and may be present in more than one cache and is not modified (as to the copy existing in working memory).
- INVALID (V): Like in the WRITE ONCE and BERKELEY protocols a block is invalid if its consistency (with other copies of the block) is not guaranteed: an invalid block is considered as missing from the cache.
- RESERVED(R): Like in the WRITE ONCE protocol, and unlike the BERKELEY one, a block is reserved when consistent with a corresponding block in working memory and present in one cache only.
- MODIFIED(D): Like in the WRITE ONCE protocol a block is modified if no more consistent with a corresponding block in working memory and present in one cache only. In addition, similarly to the BERKELEY protocol a block is modified if exclusively owned by one cache.
- SHARED MODIFIED(SD): This state has no analogy in the WRITE ONCE protocol. Like in the BERKELEY protocol, a block is SD when owned by one cache, but not in exclusive way (it may be present in other caches), and when modified as to a corresponding block in working memory.

In case of replacement, or substitution of one cache block with another block, it may be noted that blocks in state V or R do not require saving in the working memory (WRITE BACK), because already present in the working memory.
Blocks in state V do not required saving because anyhown unusable. The only blocks which require write back are those in state D or SD. The operations which cause a state change of a block, hence a modification of the bits which define the state, are the following:

### A) READ MISS (MISS on read)

The requested block is not present in the interrogated cache or is invalid.

Therefore the interrogated cache generates a memory read request on bus 10.

This read request is watched by the other caches.

If a copy of the requested block is available in any other cache and is in state D or SD., hence owned by the cache where it is stored, the owning cache inhibits the memory read operation and directly provides (through the system bus) the requested block to the requesting cache.

The owning cache changes the block state from D to SD (transition 50 Fig.3) or leaves it unchanged if already in state SD (transition 51 Fig.3).

If the block is present in some cache in any other state (V,R,V) or if missing, the block is read out from memory and received by the requesting cache.

In this case all the caches with the block (in state R or V) change its state to V or keep it in state V (transitions 52,53 Fig.3). In the requesting cache the block is set in V state (transition 54 Fig. 3).

It may be noted that the requested block is always provided by its owner (a cache or the working memory).

Unlike the WRITE ONCE protocol, if the requested block is provided by one cache, the block is not written in the working memory.

It may also be noted that generally,in the requesting cache, it will be required to perform a replacement operation, hence a memory write operation, to leave space for the new requested data block. This aspect will be considered later on.

### B) WRITE HIT (HIT on a write)

If the block is in state D the write operation is performed locally and the block remains in state D (transition 55 Fig. 3).

If the block is in state R, the write operation is performed locally and the block state is changed from R to D (transition 56 Fig.3). In this way the cache becomes the owner, without performing operations on the system bus to invalidate possible copies of the block in the other caches, as it would be required in the BERKELEY protocol.

If the block is in state V or SD, it is modified with a full or partial write and at the same time it is fully written into the working memory (WRITE THROUGH).

The local status the block in the cache is set to R (transitions 57,58 Fig.3).

The other caches having a copy of the block, if they have one, watch the write operation on the system bus and change the status of the block (status V being the only possible), from V to V (transition 158 Fig.3).

### C)FULL WRITE MISS (MISS on a write for a full block write operation).

If the block is missing from the cache the block is written into the cache and at the same time, through bus 10, is written into the working memory.

The local status of the block is set to R (transition 59 Fig.3). All other caches with a copy of the block watch the write operation on bus 10 and change the status of their copy to V (transition 158,60,61,62, Fig.3).

Unlike the protocols WRITE ONCE, BERKELEY and any other known protocol, no preliminary read operation from working memory, followed by a local cache write or memory write, is performed.

### D)PARTIAL WRITE MISS (MISS on write for a partial write).

The data to be modified is directly written into the working memory through bus 10, without affecting the cache.

The other caches watch over the write operation on the bus 10. If there is a copy of the block in state D or SD, the cache owning the block receives the new data from the bus and updates the block. The block state, if SD, is changed to D (transition 63 Fig.3). If there is a copy of the block in state R, the cache with such copy updates it with the data received from bus 10 so that the block is consistent with the copy in working memory.

The block state is maintained to R (transition 64 Fig.3).

As a possible alternative a block in state R could be simply changed to V.

If valid copies exist, they are changed to invalid (transition 158 Fig.3).

Unlike any known protocol, no preliminary memory read, followed by local cache write, is performed.
Having described the consistency protocol which is the object of the invention further advantages and original features may be pointed out.

All the anomalous bus operations, requested for instance by the BERKELEY protocol to invalidate blocks in other caches without performing read/write operations on the system bus, are avoided.

The state R, already used in the WRITE ONCE protocol, finds a broader use in the protocol of the invention:
the state R is taken non only from state V, in case of a first write operation with hit, but also every time a memory write operation and concurrent cache write provide identity (hence consistency) of a cache block and a corresponding memory block.

This is the case when changing from state SD to R or when on a write miss a full block is written both in the cache and in the memory.

The memory write operations which lead to the state R of a block, do not cause a useless occupation of the bus 10 and the memory.

If a block in state R has to be replaced in cache by another block, no memory write back operation is required because the block is already stored in working memory with the same contents.

In addition, if it is true that in case of multiple writes on the same block the first write operation, which changes it from state V to R may appear wasted for consistency purpose, it is also true that according to the present invention this operation is a prerequisite for changing a block status from R to D, thus assigning block ownership to a cache, without need of subsequent bus access for invalidations.

For the same reason the transition from state SD to R provided by the protocol of the invention, implies bus occupation equivalent to the one required in the BERKELEY protocol to invalidate possible copies of the block in the transition occurring, in case of hit on a write, from block state SD to D.
Statistically the probality is increased that a replacement operation affects a block in state R, which does not require write through, and the probality is decreased that a replacement operation affects a block in state D or SD which needs to be saved. From the afterwards, this results in a lesser use of the system bus and the memory.

In addition the exclusive use of memory write operation for assuring consistency of the information, enables to unlock the operation of the processors which have caused such operations, from the execution of the operations themselves, which may be performed off-line.

The off-line execution of write operation is supported by the interface buffer 14, which further enables to resolve conflicts in the access to the system bus and avoids the occurrence of stall situations and dynamic inconsistencies due to the subsequence of accesses to cache from CPU and system bus.

The several possible cases are considered:

### I^{ST} case

If a cache is accessed by the related CPU for a read and a READ MISS occurs, it is required to perform a read operation through bus 10. In addition it is generally required to perform a replacement operation to provide space in the cache for the block which will be read out from memory.

The data block contained in cache memory 21 at the entry having the same index of the requested block, if in state D or SD (hence needing to be saved) is first loaded in register 25 (CDO) for writing it in the working memory at an address defined by the same index and by the related TAG, which is read out from memory block 19.

Index and tag are loaded in register 29 and form the replacement address.

Meanwhile if the bus watching logic detects an operation running on bus 10, access to the bus for the replacement must be postponed until the bus becomes available.

Bus watching may require the status change of any one of the blocks in cache memory 20, according to the transitions shown in Fig. 3, as well as the reading of data from cache memory 21 towards bus 10, or the writing of a data from bus 10 into cache memory 21.

In case of a write the data is loaded in register 26(DI).

Simultaneously the comparator 36 checks that the data address on bus 10 is different from the one stored in register 29.

If the two addresses coincide, the data is written into register 25, thus updating the block to be saved, which is kept consistent with the events occurred in the system.

In case of a read from cache memory 21, the read out data is loaded into register 30 (without interference with the contents of register 25). From there it is input to bus 10.

Once the bus watching operation has been completed, the control logic 13 may take control over the bus 10 and start the memory pending operation by enabling register 27.

The requested data may be provided by the working memory or by another cache. It is received and latched in register 26 and from there loaded in cache memory 21.

At the same time it is forwarded to the requesting CPU, through gates 17.

Subsequently the data block stored in register 25 (CDO) is saved in memory 1.

The saving operation is therefore performed in off line mode, leaving the CPU free to proceed further in its operation without any delay. The saving operation is performed after the read operation, thanks to registers 25,29.

It may be further noted that if the block to be saved has been meanwhile invalidated by a bus watching operation, its saving is no more required and is not performed.

### 2^{ND} Case

If the CPU get access to the cache for a write operation and a WRITE HIT occurs with a block in state V or SD, the contents of cache memories 20,21 are updated (state R) and at the same time a working memory write operation is posted in register 27,28.

If this operation cannot be performed because the bus 10 is busy, it may happen that the consequent bus watching results in a modification of the same block from R to V (case of read consequent to a READ MISS) or from R to V (case of a write).

In the second case, the pending write operation is cancelled.

In the first case the block is forwarded to the requesting cache concurrent with its writing in memory 1.

If the bus watching operation leads to the modification of another block, the memory write is performed in a subsequent phase.

### 3^{RD} Case

If the CPU gets access to the cache for a full write operation with write miss, the block to be written is posted in register 28 (the related address in register 27) and the CPU is free to proceed in its operation.

The block is written into the cache as reserved only in the following, concurrently with access to the system bus and writing into the memory 1.

If required, a replacement operation is preset, by loading register 25,29 respectively with the block to be saved and the related address.

If access to the bus cannot be immediately obtained, because bus 10 is busy, the bus watching logic assures consistency of the data contained in the cache, and in particular of the block to be saved, which is already stored in register 25.

In addition, since the block to be written in memory has not yet been copied in the cache, it cannot be changed due to bus watching operations.

Once access to the bus 10 is obtained and the memory write is started, the block may be copied into the cache and set in state R.

This write operation is followed in unseverable way by a possible writing of the block to be saved.

### 4^{TH} Case

If the CPU gets access to the cache for a partial write operation and a WRITE MISS occurs, the data is not written in the cache and a bus write operation is posted in registers 27,28 (towards working memory or other caches having the block containing the data in state D,SD or R.

Any operation on the system bus which precedes access to the system bus for execution of such write cannot cause inconsistency or stall because it cannot change a missing block.

In particular if the bus operations require that the cache, where the posted write operation is pending in registers 27,28, supplies a data block to another cache, this may be performed because the requested block may be input to the system bus through register 30, without affecting the contents of register 28.

It is clear that the preceding description relates to a preferred form of embodiment of the invention and that several changes are possible. In particular if the size of the cache blocks is greater than the bus parallelism, only partial write operations are possible.

In this case the diagram of figure 3 and the consistency protocol are correspondingly simplified, by suppression of all transitions related to a full write operations.

The opposite case in which only full write operations are possible may also be considered.

Even in this case the protocol is simplified.

In this second case it is also possible to change the protocol by imposing that in case of MISS on a write request, the block is written only in the working memory and in the caches which have it in state D,SD or R without performing the write operation in the cache where the MISS on write has occurred.

## Claims

1. Cache memory (4,5,6) for a processor (2,3,N) associated thereto in a multiprocessor system having a working memory (1) accessed through a system bus (10), said cache memory being connected to said system bus for activation of read/write operations on said bus, comprising memory means (11) for storing a plurality of data blocks, a plurality of addresses each related to one of said data blocks and a plurality of state codes, each related to one of said data blocks, said codes defining the following block states:
- a valid block state V when the block is not modified as to a copy thereof in said working memory (1), hence can be used, and may be present in more than one cache,
- an invalid block state V when its consistency with other copies of the block is not guaranteed,
- a reserved block state R when it is consistent with a corresponding block in working memory and is present in one cache only,
- a modified block state D when it is no more consistent with a corresponding block in working memory, is present in one cache only and is exclusively owned by that cache,
- a shared modified block state SD when it is owned by one cache but not in exclusive way and is modified as to a corresponding block in working memory,
said cache memory further comprising:
- interface registers (25, 27, 28) coupled to said system bus and for storing a data block to be written through said system bus and the related address, so that said write operations on said system bus may be activated off-line as to said write request of said processor,
- first logic means (13, 26, 17, 34) for activating read operations on said system bus by means of a memory read request signal without any accompanying status signal, only and exclusively in case of a data block read requested by said associated processor and related to a data block which is either missing from said cache memory or in said invalid state V, whereby a working memory read request is asserted on said system bus and watched by the other caches and, if a copy of the requested block is available in any other cache and is in the D or SD state, the owning cache inhibits the memory read operation and directly provides the requested block to the requesting cache and sets the block state to SD,
- second logic means (13, 34, 35, 32) for activating on said system bus, by means of a memory write request signal, without any accompanying status signal, a write operation, with exclusion of any read operation:
a) in the case of a WRITE HIT, if a write operation requested by said associated processor is related to a data block which is present in either said valid state V or said shared modified state SD only, said write operation being locally performed in said cache memory and at the same time being performed into the working memory, whereby the status of said block in said cache is changed from valid V or shared modified SD to reserved R, if said data block is present in said reserved state R said write operation being locally performed in said cache only, whereby said block state is changed from reserved R to modified D, or
b) in the case of a WRITE MISS, said write operation being performed into the working memory and said cache memory operating according to criteria selected from the following:
I) if a write operation in a data block requested by said associated processor is a full block write operation related to a data block which is either missing from said cache or in invalid state V, said write operation is further locally performed in said cache memory, thereby the status of said block in said cache is set to reserved R and all other caches having a copy of the block change the status of their copy block to invalid V,
II) if a write operation in a data block requested by said associated processor is related to a data block which is either missing from said cache or in invalid state V, said write operation being either a full block write operation or a partial block write operation, said write operation is activated on said system bus without affecting said cache, whereby, if there is any copy of the block in state reserved R, modified D or shared modified SD, the cache owning the block receives the new data and updates the block, the block state, if shared modified SD, being changed into modified D and, if reserved R, being retained in reserved state R or changed to invalid state V, any copy of the block in valid state V being changed into invalid state V.

2. Cache memory as in claim 1, comprising second interface registers (25, 26) interfacing with said system bus for latching a data block stored in said cache memory and the related address, said data block having to be saved due to a read operation activated on said system bus, so that the write operation to be activated on said system bus for saving said data block, can be performed in off-line mode and subsequently to said read operation.

3. Cache memory as in claim 2, comprising a comparator (36) for comparing an address present on said system bus and said address latched in one of said second interface registers and circuit means for receiving data present on said system bus and for modifying said data block latched in said second interface registers with the data present on said system bus, if said addresses compared by said comparator coincide.

## Patentansprüche

1. Cache-Speicher (4, 5, 6) für einen Prozessor (2, 3, N), der diesem in einem Multiprozessorsystem mit einem Arbeitsspeicher (1) zugeordnet ist, auf den durch ein Systembus (10) zugegriffen wird, wobei der Cache-Speicher mit dem Systembus zur Aktivierung von Lese/Schreiboperationen auf dem Bus verbunden ist, mit einer Speichereinrichtung (11) zum Speichern einer Vielzahl von Datenblöcken, einer Vielzahl von Adressen, die jeweils auf einen der Datenblöcke bezogen sind, und einer Vielzahl von Zustandcodes, der jeder auf einer der Datenblöcke bezogen ist, wobei die Codes die folgenden Blockzustände definieren:
- einen gültigen Blockzustand v, wenn der Block nicht modifiziert ist, so daß eine Kopie hiervon in dem Arbeitsspeicher (1) damit verwendet werden kann und in mehr als einem Cache vorhanden sein kann,
- einen ungültigen Blockzustand v, wenn seine Konsistenz mit anderen Kopien des Blockes nicht garantiert ist,
- einen umgekehrten Blockzustand R, wenn er mit einem entsprechenden Block im Arbeitsspeicher konsistent ist und lediglich in einem Cache vorliegt,
- einen modifizierten Blockzustand D, wenn er nicht mehr mit einem entsprechenden Block im Arbeitsspeicher konsistent ist und lediglich in einem Cache vorliegt, der exklusiv durch diesen Cache beherrscht ist,
- einen geteilten modifizierten Blockzustand SD, wenn er durch einen Cache, jedoch nicht in exklusiver Weise, beherrscht ist und zu einem entsprechenden Block im Arbeitsspeicher modifiziert ist,
wobei der Cache-Speicher außerdem aufweist:
- Schnittstellenregister (25, 27, 28), die mit dem Systembus gekoppelt sind und einen durch den Systembus zu schreibenden Datenblock sowie die betreffenden Adressen speichern, so daß die Schreiboperationen an dem Systembus bei abgeschalteter Leitung aktiviert werden können, um eine Anforderung des Prozessors zu schreiben,
- eine erste Logikeinrichtung (13, 26, 17, 34) zum Aktivieren von Leseoperationen an dem Systembus mittels eines Speicherleseanforderungssignales ohne ein begleitendes Statussignal, lediglich und exklusiv im Fall eines Datenblockes, der durch den zugeordneten Prozessor angefordert ist und auf einen Datenblock bezogen ist, der entweder von dem Cache-Speicher oder in dem ungültigen Zustand v fehlt, wodurch eine Arbeitsspeicher-Leseanforderung auf dem Systembus bestätigt und durch andere Caches beobachtet ist, wobei, wenn eine Kopie des angeforderten Blockes in irgendeinem anderen Cache verfügbar und in dem D- oder SD-Zustand ist, der beherrschende Cache die Speicherleseoperation sperrt und direkt den angeforderten Block zu dem anfordernden Cache liefert und den Blockzustand auf SD setzt,
- eine zweite Logikeinrichtung (13, 34, 35, 32) zum Aktivieren auf dem Systembus mittels eines Speicherlese-Anforderungssignales, ohne Begleitung des Statussignales, einer Schreiboperation unter Ausschluß von jeglicher Leseoperation:
a) in dem Fall eines Schreib-Treffers, falls eine Schreiboperation, die durch den zugeordneten Prozessor angefordert ist, auf einen Datenblock bezogen ist, der entweder in dem gültigen Zustand v oder in dem geteilten modifizierten Zustand SD lediglich vorliegt, wobei die Schreiboperation lokal in dem Cache-Speicher vorgenommen wird und gleichzeitig in dem Arbeitsspeicher ausgeführt ist, wodurch der Status des Blockes in dem Cache von gültig v oder von geteilt modifiziert SD nach reserviert R verändert wird, weiterhin falls der Datenblock in dem reservierten Zustand R vorliegt, die Schreiboperation lokal in lediglich dem Cache ausgeführt wird, wodurch der Blockzustand von reserviert R nach modifiziert D verändert wird, oder
b) in dem Fall eines Schreib-Fehlens die Schreiboperation in dem Arbeitsspeicher und dem Cache-Speicher ausgeführt wird, die gemäß den aus dem folgenden ausgewählten Kriterien arbeiten:
I: Falls eine Schreiboperation in einem Datenblock, die durch den zugeordneten Prozessor angefordert ist, eine volle Blockschreiboperation ist, die auf einen Datenblock bezogen ist, der entweder aus dem Cache fehlt oder in einem ungültigen Zustand v ist, die Schreiboperation weiter lokal in dem Cache-Speicher ausgeführt wird und gleichzeitig der Block in den Arbeitsspeicher geschrieben wird, wodurch der Status des Blockes in dem Cache auf reserviert R und alle anderen Caches, die eine Kopie der Blockänderung des Status von deren Kopieblock haben, auf ungültig gesetzt sind.
II: Falls eine Schreiboperation in einem Datenblock, der durch den zugeordneten Prozessor angefordert ist, auf einen Datenblock bezogen ist, der entweder von dem Cache fehlt oder in einem ungültigen Zustand v ist, wobei die Schreiboperation entweder eine volle Blockschreiboperation oder eine Teilblockschreiboperation ist, die Schreiboperation auf dem Systembus ohne Beeinträchtigung des Caches aktiviert wird, wodurch, falls irgendeine Kopie des Blockes in dem Zustand reserviert R, abgeändert D oder geteilt modifiziert SD ist, der Cache, der den Block beherrscht, die neuen Daten empfängt und den Block fortschreibt, wobei der Blockzustand, falls geteilt modifiziert SD vorliegt, in modifiziert D verändert wird, und falls reserviert R vorliegt, im reservierten Zustand R zurückbehalten oder zu einem ungültigen Zustand v verändert wird, wobei jede Kopie des Blockes im gültigen Zustand v in einen ungültigen Zustand v verändert wird.

2. Cache-Speicher nach Anspruch 1, mit zweiten Schnittstellenregistern (25, 26), die den Systembus schneiden, um einen Datenblock zu verriegeln, der in dem Cache-Speicher und der zugeordneten Adresse gespeichert ist, wobei der Datenblock zu bewahren ist aufgrund einer Leseoperation, die auf dem Systembus aktiviert ist, so daß die Schreiboperation, die auf dem Systembus zum Bewahren des Datenblockes zu aktivieren ist, in einem Modus abgeschalteter Leitung und nach der Leseoperation ausgeführt werden kann.

3. Cache-Speicher nach Anspruch 2, mit einem Vergleicher (36) zum Vergleichen einer Adresse, die auf dem Systembus vorliegt; und der Adresse, die in einem der zweiten Schnittstellenregister verriegelt ist und einer Schaltungseinrichtung zum Empfangen von Daten, die auf dem Systembus vorliegen, und zum Modifizieren des Datenblockes, der in den zweiten Schnittstellenregistern verriegelt ist, mit den auf dem Systembus vorliegenden Daten, falls die durch den Vergleicher verglichenen Adressen übereinstimmen.

## Revendications

1. Mémoire cache (4, 5, 6) pour un processeur (2, 3, N) associé à cette dernière dans un système multiprocesseur possédant une mémoire de travail (1) accédée par l'intermédiaire d'un bus de système (10), ladite mémoire cache étant reliée audit bus de système pour activer des opérations de lecture/écriture sur ledit bus, comprenant des moyens formant mémoire (11) pour stocker une pluralité de blocs de données, une pluralité d'adresses, chacune étant relative à l'un desdits blocs de données, et une pluralité de codes d'état, chacun étant relatif à l'un desdits blocs de données, lesdits codes définissant les états de bloc suivants :
- un état de bloc valide V, quand le bloc n'est pas modifié pour ce qui est d'une copie de ce dernier dans ladite mémoire de travail (1), peut donc être utilisé, et peut être présent dans plus d'une mémoire cache,
- un état de bloc invalide V quand sa cohérence avec d'autres copies du bloc n'est pas garantie,
- un état de bloc réservé R quand il est cohérent avec un bloc correspondant dans la mémoire de travail et qu'il est seulement présent dans une mémoire cache particulière,
- un état de bloc modifié D quand il n'est plus cohérent avec un bloc correspondant dans la mémoire de travail, qu'il est seulement présent dans une mémoire cache particulière et qu'il est possédé par cette mémoire cache d'une façon exclusive,
- un état de bloc modifié partagé SD quand il est possédé par une mémoire cache particulière mais pas d'une façon exclusive et qu'il est modifié pour ce qui est d'un bloc correspondant dans la mémoire de travail, ladite mémoire cache comprenant, de plus :
- des registres d'interface (25, 27, 28) reliés audit bus de système et pour stocker un bloc de données à écrire par l'intermédiaire dudit bus de système et de l'adresse concernée, de sorte que lesdites opérations d'écriture sur ledit bus de système peuvent être activées en différé pour ce qui est de ladite demande d'écriture dudit processeur,
- des premiers moyens logiques (13, 26, 17, 34) pour activer les opérations de lecture sur ledit bus de système au moyen d'un signal de demande de lecture de mémoire sans aucun signal d'état connexe, seulement et exclusivement dans le cas d'une lecture de bloc de données demandée par ledit processeur associé et relatif à un bloc de données qui est soit manquant de ladite mémoire cache soit dans ledit état invalide V, de sorte qu'une demande de lecture de mémoire de travail est activée sur ledit bus de système et regardée par les autres mémoires caches et, si une copie du bloc demandé est disponible dans une quelconque autre mémoire cache et est dans l'état D ou SD, la mémoire cache propriétaire inhibe l'opération de lecture de mémoire et donne directement le bloc demandé à la mémoire cache demandeuse et met l'état de bloc à SD,
- des seconds moyens logiques (13, 34, 35, 32) pour activer sur ledit bus de système, au moyen d'un signal de demande d'écriture en mémoire, sans aucun signal d'état connexe, une opération d'écriture, en excluant toute opération de lecture :
a) dans le cas d'un WRITE HIT, si une opération d'écriture demandée par ledit processeur associé se rapporte à un bloc de données qui est présent soit dans ledit état valide V soit dans ledit état modifié partagé SD, seulement, ladite opération d'écriture étant localement effectuée dans ladite mémoire cache et étant effectuée, au même moment, dans la mémoire de travail, de sorte que l'état dudit bloc dans ladite mémoire cache est changé de l'état valide V ou modifié partagé SD pour l'état réservé R, si ledit bloc de données est présent dans ledit état réservé R, ladite opération d'écriture étant localement effectuée dans ladite mémoire cache, seulement, de sorte que ledit état de bloc est changé de l'état réservé R pour l'état modifié D, ou
b) dans le cas d'un WRITE MISS, ladite opération d'écriture étant effectuée dans la mémoire de travail et ladite mémoire cache fonctionnant selon des critères sélectionnés à partir de ce qui suit :
I) si une opération d'écriture dans un bloc de données demandée par ledit processeur associé est une opération d'écriture de bloc complet relatif à un bloc de données qui est soit manquant de ladite mémoire cache soit dans un état invalide V, ladite opération d'écriture est, de plus, localement effectuée dans ladite mémoire cache et au même moment le bloc est écrit dans la mémoire de travail, l'état dudit bloc dans ladite mémoire cache est, de ce fait, mis à réservé R et toutes les autres mémoires caches ayant une copie du bloc changent l'état de leur copie du bloc à invalide V,
II) si une opération d'écriture dans un bloc de données demandée par ledit processeur associé se rapporte à un bloc de données qui est soit manquant de ladite mémoire cache soit dans un état invalide V, ladite opération d'écriture étant soit une opération d'écriture de bloc complet soit une opération d'écriture de bloc partiel, ladite opération d'écriture est activée sur ledit bus de système sans affecter ladite mémoire cache, de sorte que, s'il y a une quelconque copie du bloc dans l'état réservé R, modifié D ou modifié partagé SD, la mémoire cache possédant le bloc reçoit les nouvelles données et met à jour le bloc, l'état de bloc, s'il est à modifié partagé SD, il est changé pour modifié D, et s'il est à réservé R, il est conservé dans l'état réservé R ou il est changé pour l'état invalide V, toute copie du bloc à l'état valide V étant changée pour l'état invalide V.

2. Mémoire cache selon la revendication 1, comprenant des seconds registres d'interface (25, 26) établissant une interface avec ledit bus de système pour mémoriser un bloc de données stocké dans ladite mémoire cache et l'adresse concernée, ledit bloc de données ayant à être sauvegardé à cause d'une opération de lecture activée sur ledit bus de système, de sorte que l'opération d'écriture à activer sur ledit bus de système pour sauvegarder ledit bloc de données, peut être effectuée en mode différé et à la suite de ladite opération de lecture.

3. Mémoire cache selon la revendication 2, comprenant un comparateur (36) pour comparer une adresse présente sur ledit bus de système et ladite adresse mémorisée dans un desdits seconds registres d'interface, et des moyens formant circuit pour recevoir les données présentes sur ledit bus de système et pour modifier ledit bloc de données mémorisé dans lesdits seconds registres d'interface avec les données présentes sur ledit bus de système, si lesdites adresses comparées par ledit comparateur coïncident.
